**Europäisches Patentamt**

**European Patent Office**

**Office européen des brevets**

(11) Publication number: **0 202 375**
**B1**

(12) **EUROPEAN PATENT SPECIFICATION**

(45) Date of publication of patent specification: **28.02.90**

(21) Application number: **85303706.7**

(22) Date of filing: **24.05.85**

(51) Int. Cl.⁵: **B 60 C 23/00**

(54) Tire pressure indicating device.

(43) Date of publication of application:
**26.11.86 Bulletin 86/48**

(45) Publication of the grant of the patent:
**28.02.90 Bulletin 90/09**

(84) Designated Contracting States:
**AT BE CH DE FR GB IT LI LU NL SE**

(56) References cited:
**EP-A-0 108 176**
**US-A-3 662 335**

(73) Proprietor: **Galasko, Philip Elliot**
**3, The Boulders Khyber Rock**
**Sandton Transvaal (ZA)**

(72) Inventor: **Galasko, Philip Elliot**
**P.O. Box 185**
**Pretoria, 0001 (ZA)**
Inventor: **Kruger, Frans Johannes**
**919 Arcadia Street Arcadia**
**Pretoria Transvaal (ZA)**

(74) Representative: **Tomlinson, Kerry John et al**
**Frank B. Dehn & Co. European Patent Attorneys**
**Imperial House 15-19 Kingsway**
**London WC2B 6UZ (GB)**

Courier Press, Leamington Spa, England.

## Description

The invention relates generally to detecting conditions of rotatable members and has particular application to detecting the pressure of a vehicle tire.

A number of patent specifications have addressed the problem of detecting and indicating the pressure of a vehicle tire. These documents disclose methods of using the variations in tire pressure to modify one or more parameters of a resonant circuit which is attached to the vehicle wheel. In many of those cases, resonant primary, secondary or receiving circuits are used, at least two such circuits being electrically closely coupled. For example UK 2 065 896, UK 2 069 209, US 2 274 557, USA 3 662 335 and European application 0 045 401 disclose systems having closely coupled circuits.

A known system corresponding to the preamble of the present Claim 1 and disclosed in EP—A—0 108 176, has a transmitting coil, an oscillatory circuit, and a receiving coil outside the tire. The transmitting coil is supplied with pulses which are transmitted to the oscillatory circuit to energise it and cause oscillations therein at its natural frequency. This arrangement is disadvantageous in several respects however. For example if the resonating coil is energized with pulses at a repetition rate equal to or greater than the frequency of oscillation of the coil, then the resonating coil will not oscillate at its natural frequency. Furthermore if the coils are closely coupled then they will interfere with one another and the apparatus will malfunction. In addition, a part of the monitoring circuit is located outside the tire which renders it vulnerable to damage.

Given this state of the art, the present invention is essentially characterised by the features according to the characterising portion of the present Claim 1.

Both the energising coil and the sensing coil may be located adjacent to and outside the tire, whereas the entire circuit defining means is located within the tire.

The monitoring circuit may have separate capacitive devices arranged to be selectively switched into the circuit and a pressure switch for switching the capacitive devices into and out of the circuit.

The signal provided by the sensing means may be arranged to produce a warning signal whenever its value differs from a predetermined value or range of values. Such a warning signal may be a visual signal and/or an audible signal.

In indicating devices of the present invention the passive monitoring circuit is excited without causing undesirable interference between the exciting energy and the oscillations of the monitoring circuit. This is accomplished on the one hand by using coupling circuits having small coefficients of coupling, that is the coupling circuits are not closely coupled. Even so the sensing means is able to pick up and respond to flux changes caused by the monitoring circuit to detect the frequency of oscillations in the monitoring circuit. On the other hand the exciting energy is provided in the form of single pulses transmitted at intervals many times greater than the oscillations of the monitoring circuit. This means that errors in the detection of the frequency of oscillation can be eliminated and direct interference between the energising means and the sensing means is not produced and/or need not be catered for.

As mentioned above, in the prior art, primary windings, secondary windings and receiving circuit windings are provided, at least two of which are closely coupled, and the secondary winding being fixed to rotate with the wheel. Mutual inductance in the close coupled windings means that in cases where the frequency at any time in the secondary winding relates to the parameter to be measured, the close coupling interferes with the measurements to be made. Because in mutually tuned circuits the degree of coupling is directly proportional to the separation between windings, if this separation varies in use undesirable and unpredictable variation in amplitude and bandwidth occur. In applications such as tire pressure indicating and warning devices this is likely to happen in practice and represents a serious disadvantage. In embodiments of this invention, the coefficient of coupling is made deliberately small and therefore becomes unimportant. In fact, the passive monitoring circuit, rotating with the wheel, can be treated as an isolated circuit. The natural frequency at any time of the monitoring circuit, which is dependent on tire pressure, can be detected in a manner which is independent of amplitude, coefficient of coupling or feedback and any other variations normally associated with the physical and electrical requirements of maintaining a stable or predictable relationship between mutually coupled windings.

As mentioned earlier, in embodiments of the invention pulsed excitation is used for driving the passive monitoring circuit. The pulses are at a 'frequency' much less than the natural frequency of the monitoring circuit. For example in one preferred embodiment the 'frequency' of the pulses is one sixteenth the natural frequency of the monitoring circuit. In fact, the pulses may be provided at greater intervals and need not be produced 'in phase' with the oscillations of the monitoring circuit.

In mutually coupled or closely coupled circuits the frequency of the energising signals are often the same as the natural frequency of the passive oscillatory circuit and are essentially in phase with the oscillations of the oscillatory circuit.

The sensing coil is normally positioned so that coupling between the resonating coil and the sensing coil is small and the sensing coil is a minimum distance to the tire but of course the tire must be free at all times to rotate without fouling the sensing coil. Naturally the separation between the coils will vary to some extent as the vehicle is driven along the road, but as stated above variations in separation do not affect the satisfactory operation of the monitoring means of the invention. It will be noted also that if the sensing means is energised directly and inadvertently by the energising pulses, the relatively infrequent occurrence can easily be distinguished electrically from the natural frequency oscillation signals picked up for determination of the frequency thereof in the passive monitoring circuit.

Tire pressure measuring devices according to the invention will now be described by way of example with reference to the accompanying drawings in which:

Figure 1 is a cross-section of part of a tire showing schematically part of the device;

Figure 2 is a block circuit diagram of the device;

Figures 3 and 4 are circuit diagrams of parts of the device.

Figure 5 is a representation of the signals at various points in the device during operation thereof, at one operating frequency.

Figure 6 is a representation of the signals at various points in the device during operation thereof, at a lower operating frequency;

Figure 7 shows a 0—10 volt voltmeter calibrated to indicate tire pressure;

Figures 8 and 9 show circuit diagrams of part of the circuit of the device; and

Figures 10 and 11 are further cross-sectional views of the tire.

Description of a preferred embodiment

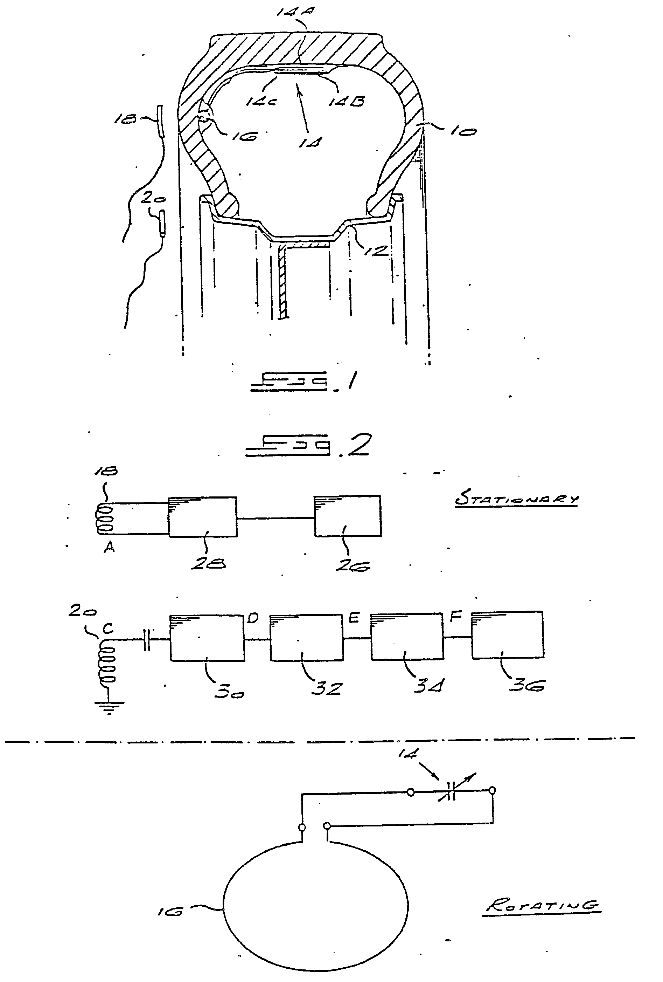

Referring to the drawings, in Figure 1 a vehicle tire 10 is mounted on a rim 12 and an air pressure sensing device 14 is attached to the tire in the form of two capacitor plates 14A and 14B separated by a layer of elastic dielectric material 14C. The device 14 is electrically connected to an inductance coil 16 extending around the inside wall of the tire 10. The coil 16 is positioned generally midway between the rim 12 and the tread of the tire 10 at the widest part of the tire 10. A transmitting or energising inductance coil 18 and receiving inductance coil 20 are attached to a fixed (non-rotatable) structural member (not shown) of the vehicle. The coils 16, 18 and 20 are positioned so as to be loosely coupled.

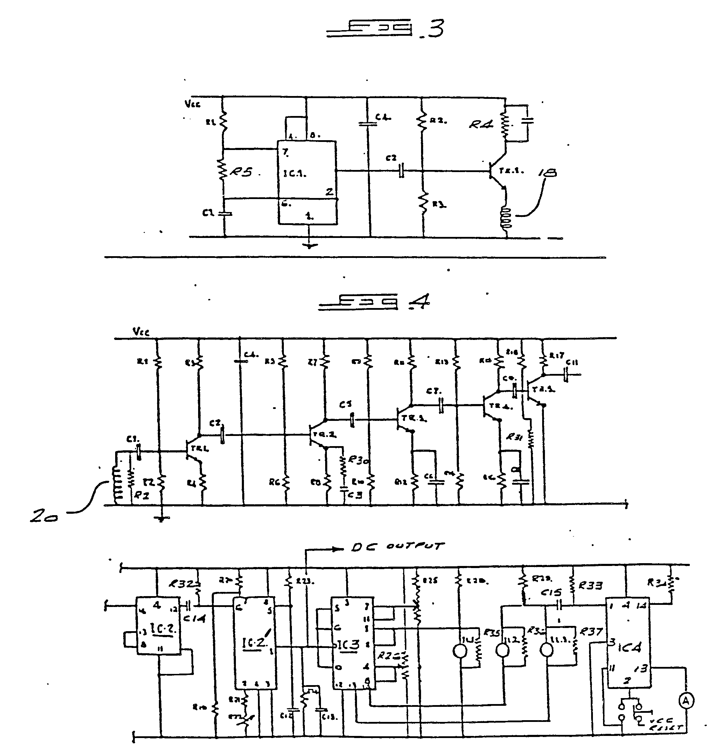

In Figure 2, a passive oscillatory circuit which comprises the capacitor device 14 and the coil 16 are shown on the 'rotating' part of the drawing. The inductance coil 18 is driven by a pulse generator 26 via an amplifier 28, the repetition rate of the pulses being much lower than the natural frequency of oscillation of the passive oscillatory circuit. The inductance coil 20 is connected to a series circuit comprising an amplifier 30, a divider circuit 32, a frequency-to-direct current-voltage-converter 34 and a comparatory indicator circuit 36.

In use, whether the vehicle tire is stationary or rotating, the passive oscillatory circuit is inductively energised by pulses generated by the pulse generator 26 and transmitted by the coil 18. The passive oscillatory circuit oscillates at its natural frequency, the value of which depends on the capacitive value of the device 14 in series with the coil 16, the frequency being given by the expression

$$f = \frac{1}{2\pi\sqrt{LC}},$$

and the waveform produced in the passive oscillatory circuit by the exciting pulses takes the general form

$$f(t) = \frac{1}{\omega}e^{-\alpha t}\sin \omega t,$$

where $\alpha$ is the attenuation constant of the circuit.

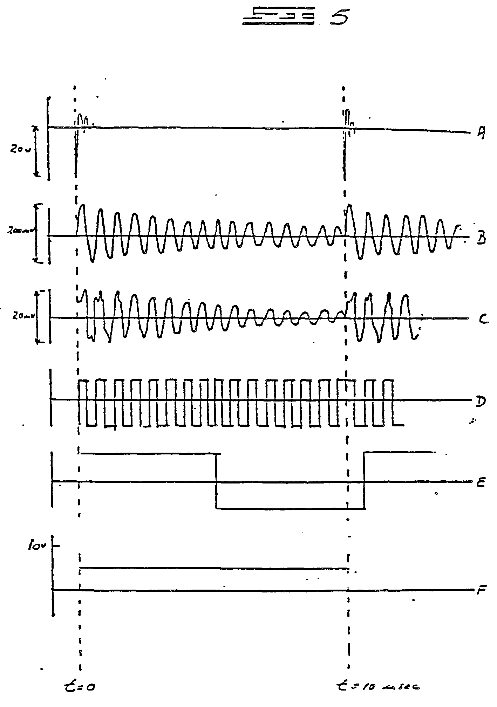

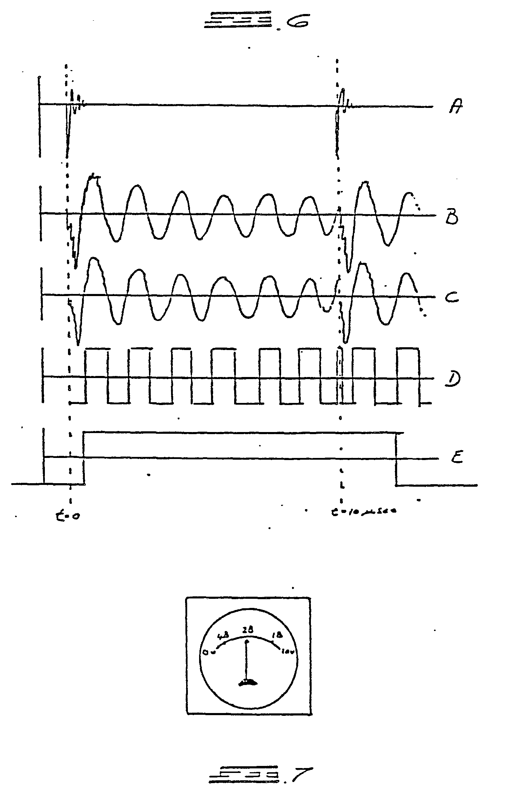

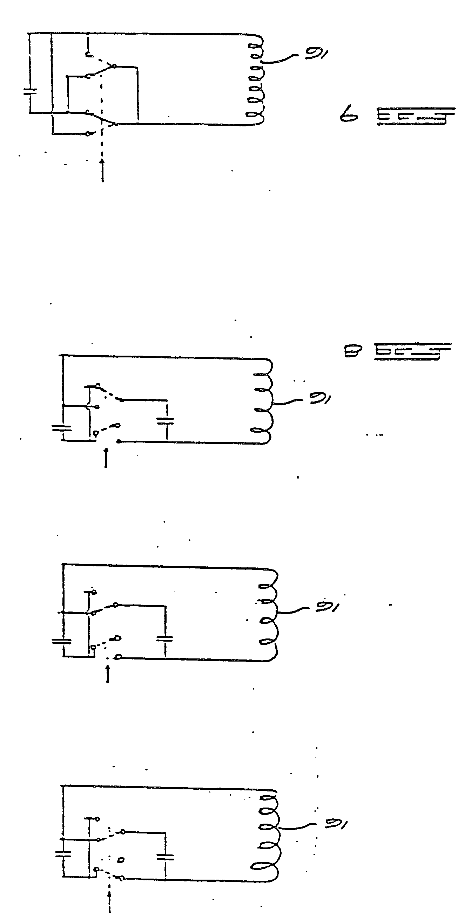

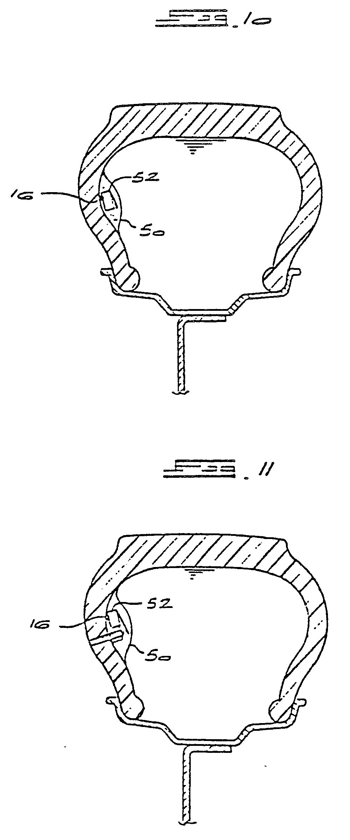

Figures 5 and 6 show at A and B the exciting pulses and the naturally decaying waveform of the passive oscillatory circuit, respectively. The frequency of oscillation is sensed by inductive coupling between the coils 16 and 20 and the frequency of oscillation is detected by the circuits 30, 32, 34 and 36 to provide an output corresponding to that frequency. According to the chosen range of values of the capacitor device 14, the indicated pressure can be made to correspond directly to the pressure of the tire. At C is shown the received signal at the coil 20, while D shows the amplified and conditioned signal after it has passed through the receiving amplifier 30. It can be seen that the frequency information is retained. At E is shown the signal after processing by the frequency divider circuit 32. The original frequency of, for example 1.6 MHz must be divided to a frequency in the range below 100 kHz, which is the practical upper frequency limit for commercially or generally available frequency to voltage converters. At F in Figure 5 is shown the DC voltage corresponding to the received frequency. This voltage is supplied to a meter such as that shown in Figure 7, and the meter can be calibrated to read pressure directly.

If the tire pressure falls to an unsatisfactory low level, the detected frequency that corresponds to a low tire pressure causes an output signal at the circuit 36 which can be used to generate a visual or audible warning to the driver of the vehicle. As an alternative in Figure 9 the device can be arranged so that there is a fixed value capacitor, which is short-circuited by a pressure sensing switching device when the tire pressure drops below or exceeds a predetermined level, thereby in turn causing actuation of an alarm.

In other embodiments, two or more fixed value capacitors are employed in place of a single fixed or variable capacitor. Whereas capacitance of the variable capacitor varies with the pressure of the air in the tire, with a resulting change in the natural resonant frequency of the circuit 14, 16, a tire pressure responsive switching arrangement is used to switch the fixed capacitors into and out of circuit with the coil 16 as required. The circuits of such switched capacitors are shown in Figure 8.

The circuit details of the pulse generator 26 and the amplifier 28 are shown in Figure 3. The pulse transmitter circuit 26 includes a pulse generator IC.1 arranged in such a fashion as to produce a 1 micro-second pulse every 10 micro-seconds. The pulse width and period between pulses is so selected as to produce negligible errors in the frequency to be measured from the rotating member. The amplifier 28 consists of a single stage transistor driver amplifier TR.1 arranged to drive transmitting coil 18. The pulse generator and amplifier circuits 28 are mounted in the same housing as the receiver circuit in the cab of the vehicle, but could be mounted in a separate housing and at any convenient space in the vehicle. Transmitting coil 18 is connected to TR.1 by means of a coaxial cable (not shown). Coil 18 is mounted on the frame of the vehicle adjacent to the road wheel diagonal to the coil 16 inside the tire. Coils 18 and 16 are loosely coupled to ensure a small coefficient of coupling.

The circuit details of the amplifier 30, the divider circuit 32, the frequency to direct current voltage converter 34 and the comparator/indicator circuit 36 are shown in Figure 4. The circuit diagram is shown in two parts for convenience, the circuit is in practice provided on one circuit board and is connected together. The amplifier 30 consists of a high gain wide band transistor amplifier incorporating TR.1, TR.2, TR.3, TR.4 and TR.5. The divider 32 is a 4 bit binary counter IC.2, and the frequency to direct current voltage converter 34 comprises a precision frequency to voltage converter IC.2'. The circuit 36 includes a voltage comparator circuit with alarm threshold adjustment IC.3, status indicating lamps IL.1, IL.2 and IL.3 and audio alarm latching and reset circuit IC.4. The coil 20 is mounted on a member of the vehicle adjacent to the inside wall of the tire and is loosely coupled with coil 16 mounted inside the tire. Coil 20 is connected to the receiver circuit mounted in the cab of the vehicle by means of a coaxial cable.

The signal present in the passive oscillating circuit is detected by coil 20 and is applied to the input of the amplifier 30 where it is amplified and limited to contain frequency information only. The received signal is between 400 kHz and 1.6 MHz depending on the pressure inside the tire. The frequency information, which is inversely proportional to the pressure inside the tire, is divided by 16 by IC.2, the 4 bit binary counter, to produce a signal in the 25 kHz to 100 kHz band. The frequency information is translated to a dc voltage level using IC.2'. The dc output from IC.2' is applied to a 0 to 10 volt meter to indicate the tire pressure in analogue fashion as shown in Figure 7.

The output from IC.2' is also applied to IC.3, the voltage comparator circuit. R25 is used to set the high voltage (low pressure) alarm threshold and R26 is used to set the low voltage (high pressure) alarm threshold. When the tire pressure is within limits, IL.1 a green LED is energised. When pressure is outside the preset limits red L.E.D IL.2 for high pressure or IL.3 for low pressure are energised and the alarm circuit IC.4 is enabled causing an audio alarm which can be reset using the pushbutton indicated.

The output of the comparator/indicator so provided may be used in various other ways to produce audible or visual alarms if the pressure of the tire reduces to below or exceeds predetermined pressure levels, as desired.

In Figures 10 and 11 two forms of pressure sensitive switch are shown. A membrane 50 stretches over a microswitch 52 which is normally closed when the air pressure in the tire is sufficiently high. When the pressure drops below a predetermined safe or satisfactory pressure, the microswitch 52 is opened by a biasing spring (not shown) to short-out a capacitor or to alter the connection to the coil 16 of capacitors such as shown in Figures 8 or 9 as the case may be. In Figure 11, the microswitch 52 is provided with a screw adjustment so that by using an Allen Key inserted through a sealed aperture in the wall of the tire, the pressure at which the switch 52 operates can be adjusted.

Many variations to the device are envisaged. For example, the passive oscillatory circuit may be arranged with switched and separate inductance coils 16, or include a variable inductance coil having an inductance which is varied with tire pressure. Further, the passive oscillatory circuit can be arranged to respond additionally to other conditions such as temperature. Pressure and temperature devices may be provided in combination and the frequency of oscillations in the coil 16, or other coils, may be separately measured to determine either the pressure or temperature in turn.

Instead of a single coil 20, two similar coils may be arranged radially displaced around the tire at each side of the coil 18, electrically connected in parallel. Thus, in Figure 4 there would be two coils 20 connected in parallel. In practice this has the effect that any movement of the tire relative to the coils 20 tends to be compensated in the signals sensed by each of the two coils 20. It is, of course, possible to have three or more coils 20 connected in parallel if desired. Suitable circuit types are: IC1-555, IC2-74C393, IC2-LM331, IC3-LM339, IC4-MM74C73.

**Claims**

1. Tire pressure monitoring means comprising a passive resonant electrical circuit defining means (14, 16) which defines a resonant electrical monitoring circuit and which is secured to a tire (10) to be rotatable therewith, at least a part (14) of the circuit defining means being responsive to the pressure in the tire, to vary the natural frequency of oscillation of the monitoring circuit, and at least a part (16) of the circuit defining means comprising a resonating coil; energising means for energising the monitoring circuit to cause oscillations therein, the energising means including an energising coil (18) and a pulse geneating means (26) for generating a series of energising pulses with the energising coil (18) being connected to the pulse generating means and sensing means for providing a signal representative of the frequency of oscillations in the monitoring circuit, the sensing means including a sensing coil (20) that is located suitably close to the tire; characterised in that the energising pulses are generated at a repetition rate suitably lower than the resonant frequency of oscillation of the monitoring circuit (14, 16); in that the energising coil and the resonating coil are loosely inductively coupled such that the natural frequency of oscillation of the monitoring circuit is substantially independent of the energising means; in that the resonating coil (16) and the sensing coil (20) are loosely inductively coupled such that the natural frequency of oscillation of the monitoring circuit is substantially independent of the sensing means (20); and in that the entire monitoring circuit (14, 16) is located within the tire.

2. Monitoring means as claimed in Claim 1, characterised in that the energising coil (18) is located adjacent and outside the tire.

3. Monitoring means as claimed in Claim 1 or Claim 2, characterised in that the sensing coil (20) is located adjacent and outside the tire.

4. Monitoring means as claimed in any preceding claim characterised in that the part (14) of the circuit defining means responsive to pressure is a capacitive component that is pressure variable to vary its capacitance.

5. Monitoring means as claimed in any preceding claim characterised in that it further comprises comparison means (36) for comparing the signal provided by the sensing means (20) with a predetermined value and for providing an alarm signal when the signal provided by the sensing means (20) equals the predetermined value.

6. Monitoring means as claimed in any preceding claim, characterised in that the part (14) of the circuit defining means that is responsive to pressure includes two capacitive components and a pressure switch (52), the capacitive components being switchable into and out of the circuit in accordance with the pressure in the tire.

7. Monitoring means as claimed in Claim 6, characterised in that the switch (52) includes a mounting means for mounting it in the tire and an adjusting means for externally adjusting it to vary the value of pressure at which it operates.

8. Monitoring means as claimed in any one of Claims 1 to 7, characterised in that the circuit defining means (14, 16) is located within a pressure chamber defined by the tire (10) and a rim (12) on which it is mounted.

9. Monitoring means as claimed in Claim 8, characterised in that the resonating coil (16) is secured to an inner surface of the tire.

10. Monitoring means as claimed in Claim 9, characterised in that the coil (16) is co-axial with the tire.

11. Monitoring means as claimed in Claims 9 or 10, characterised in that the coil (16) is secured to a side wall portion of the tire.

## Patentansprüche

1. Reifendrucküberwachungseinrichtung mit Mitteln (14, 16) zum Definieren eines passiven elektrischen Resonanzkreises, die eine elektrische Resonanzüberwachungsschaltung definieren und an einem Reifen (10) befestigt und mit diesem drehbar sind, wobei mindestens ein Teil (14) der die Schaltung definierenden Mittel auf den Reifendruck derart anspricht, daß die Eigenfrequenz der Schwingung der Überwachungsschaltung verändert wird, und mindestens ein Teil (16) der die Schaltung definierenden Mittel eine Resonanzspule umfaßt; Versorgungsmittel zur Stromversorgung der Überwachungsschaltung, um darin Schwingungen anzuregen, wobei die Stromversorgungsmittel eine Anregungsspule (18) und Pulserzeugungsmittel (26) umfassen zur Erzeugung einer Folge von Anregungsimpulsen, wobei die Anregungsspule (18) mit den Pulserzeugungsmitteln verbunden ist, sowie Fühlmittel zum Erzeugen eines von der Frequenz der Schwingungen in der Überwachungsschaltung abhängigen Signals, wobei die Fühlmittel eine ausreichend nah am Reifen angeordnete Fühlspule (20) umfassen, dadurch gekennzeichnet, daß die Anregungsimpulse mit einer Wiederholungsfrequenz erzeugt werden, die ausreichend niedriger als die Resonanzfrequenz der Schwingungen in der Überwachungsschaltung (14, 16) ist; daß die Anregungsspule und die Resonanzspule derart lose induktiv gekoppelt sind, daß die Eigenfrequenz der Schwingungen der Überwachungsschaltung im wesentlichen unabhängig von den Anregungsmitteln ist; daß die Resonanzspule (16) und die Fühlspule (20) derart lose induktiv gekoppelt sind, daß die Eigenfrequenz der Schwingung der Überwachungsschaltung im wesentlichen unabhängig von den Fühlmitteln ist; und daß die gesamte Überwachungsschaltung (14, 16) innerhalb des Reifens angeordnet ist.

2. Überwachungseinrichtung nach Anspruch 1, dadurch gekennzeichnet, daß die Anregungsspule (18) neben und außerhalb des Reifens angeordnet ist.

3. Überwachungseinrichtung nach Anspruch 1 oder 2, dadurch gekennzeichnet, daß die Flügelspule (20) neben und außerhalb des Reifens angeordnet ist.

4. Überwachungseinrichtung nach einem der vorstehenden Ansprüche, dadurch gekennzeichnet, daß der druckempfindliche Teil (14) der die Schaltung bildenden Mittel eine kapazitive Komponente mit druckabhängiger Kapazität ist.

5. Überwachumgseinrichtung nach einem der vorstehenden Ansprüche, dadurch gekennzeichnet, daß sie ferner Vergleichsmittel (36) aufweist, die das Signal von den Fühlmittel (20) mit einem vorgegebenen Wert vergleichen und ein Alarmsignal erzeugen, wenn das Signal von den Fühlmitteln (20) den vorgegebenen Wert erreicht.

6. Überwachungseinrichtung nach einem der vorstehenden Ansprüche, dadurch gekennzeichnet, daß der druckempfindliche Teil (14) der die Schaltung bildenden Mittel zwei kapazitive Kom-

5

ponenten und einen Druckschalter (52) umfaßt, wobei die kapazitiven Komponenten in Abhängigkeit von Druck im Reifen zu der Schaltung zu- oder von ihr abschaltbar sind.

7. Überwachungseinrichtung nach Anspruch 6, dadurch gekennzeichnet, daß der Schalter (52) eine Halterung für seine Montage in dem Reifen und Einstellmittel für seine Justierung von außen aufweist, um den Druck, bei dem der Schalter betätigt wird, zu ändern.

8. Überwachungseinrichtung nach einem der Ansprüche 1 bis 7, dadurch gekennzeichnet, daß die die Schaltung definierenden Mittel (14, 16) innerhalb einer Druckkammer angeordnet sind, die von dem Reifen (10) und einer Felge (12), auf der dieser montiert ist, gebildet ist.

9. Überwachungseinrichtung nach Anspruch 8, dadurch gekennzeichnet, daß die Resonanzspule (16) an einer Innenfläche des Reifens befestigt ist.

10. Überwachungseinrichtung nach Anspruch 9, dadurch gekennzeichnet, daß die Spule (16) koaxial mit dem Reifen ist.

11. Überwachungseinrichtung nach Anspruch 9 oder 10, dadurch gekennzeichnet, daß die Spule (16) an einem Seitenwandbereich des Reifens befestigt ist.

**Revendications**

1. Dispositif de surveillance de la pression d'un pneu comprenant un dispositif définissant un circuit électrique résonnant passif (14, 16) qui définit un circuit de surveillance électrique résonnant et qui est fixé à un pneu (10) de manière à pouvoir tourner avec ce dernier, au moins une partie (14) du dispositif définissant le circuit répondant à la pression de gonflage du pneu pour faire varier la fréquence d'oscillation naturelle du circuit de surveillance et au moins une partie (16) du dispositif définissant le circuit comprenant une bobine résonnante; un dispositif excitateur pour exciter le circuit de surveillance de manière à provoquer des oscillations à l'intérieure de celui-ci, le dispositif excitateur comportant une bobine excitatrice (18) et un dipositif générateur d'impulsions (26) pour la génération d'une série d'impulsions excitatrices avec la bobine excitatrice (18) étant connectée au dispositif générateur d'impulsions et un dispositif capteur pour délivrer un signal représentatif de la fréquence des oscillations dans le circuit de surveillance, le dispositif capteur comportant une bobine capteuse (20) qui est disposée suffisamment prés du pneu, caractérisé en ce que les impulsions excitatrices sont générées à une cadence convenablement inférieure à la fréquence d'oscillation résonnante du circuit de surveillance (14, 16), par le fait que la bobine excitatrice et la bobine résonnante sont inductivement couplées d'une manière lâche, de telle sorte que la fréquence d'oscillation naturelle du circuit de surveillance soit substantiellement indépendante du dispositif excitateur; par le fait que la bobine résonnante (16) et la bobine capteuse (20) sont inductivement couplées de manière lâche de telle sorte que la fréquence naturelle d'oscillation du circuit de surveillance soit substantiellement indépendante du dispositif capteur (20) et par le fait que l'ensemble du circuit de surveillance (14, 16) se trouve à l'intérieur du pneu.

2. Dispositif de surveillance tel que revendiqué dans la revendication 1, caractérisé en ce que la bobine excitatrice (18) se trouve dans une position adjacente au pneu, extérieurement à ce dernier.

3. Dispositif de surveillance tel que revendiqué dans la revendication 1 ou la revendication 2, caractérisé en ce que la bobine capteuse (20) se trouve dans une position adjacente au pneu, extérieurement à ce dernier.

4. Dispositif de surveillance tel que revendiqué dans l'une quelconque des revendications précédentes, caractérisé en ce que la partie (14) du dispositif définissant le circuit répondant à la pression est un composant capacitif dont la capacité varie avec la pression.

5. Dispositif de surveillance tel que revendiqué dans l'une des revendications précédentes, caractérisé en ce qu'il comprend, en outre, un dispositif comparateur (36) pour la comparaison du signal délivré par le dispositif capteur (20) avec une valeur prédéterminée et pour délivrer un signal d'alarme lorsque le signal délivré par le dispositif capteur (20) est égal à la valeur prédéterminée.

6. Dispositif de surveillance tel que revendiqué dans l'une quelconque des revendications précédentes, caractérisé en ce que la partie (14) du dispositif définissant le circuit et qui répond à la pression, comporte deux composants capacitifs et un interrupteur à pression (52), les composants capacitifs pouvant être mis en circuit et hors circuit selon la pression de gonflage du pneu.

7. Dispositif de surveillance tel que revendiqué dans la revendication 6, caractérisé en ce que l'interrupteur (52) comporte un dispositif de montage pour son montage dans le pneu et un dispositif de réglage pour son réglage externe, de manière à faire varier la valeur de pression à laquelle il fonctionne.

8. Dispositif de surveillance tel que revendiqué dans l'une quelconque des revendications 1 à 7, caractérisé en ce que le dispositif définissant le circuit (14, 16) se trouve à l'intérieur d'une chambre à pression définie par le pneu (10) et une jante (12) sur laquelle ce dernier est monté.

9. Dispositif de surveillance tel que revendiqué dans la revendication 8, caractérisé en ce que la bobine résonnante (16) est fixée sur une paroi intérieure du pneu.

10. Dispositif de surveillance tel que revendiqué dans la revendication 9, caractérisé en ce que la bobine (16) est co-axiale avec le pneu.

11. Dispositif de surveillance tel que revendiqué dans les revendications 9 ou 10, caractérisé en ce que la bobine (16) est fixée à une partie de flanc du pneu.

FIG. 1

FIG. 2

STATIONARY

ROTATING

Fig. 3

Fig. 4

Fig. 5

Fig. 6

A

B

C

D

E

t=0

t=10 μsec

Fig. 7

_Fig. 10_

_Fig. 11_